(19) Europäisches Patentamt
European Patent Office
Office européen des brevets

(11) **EP 2 098 545 B1**

(12) **EUROPEAN PATENT SPECIFICATION**

(45) Date of publication and mention
of the grant of the patent:
**10.10.2012 Bulletin 2012/41**

(21) Application number: **07860478.2**

(22) Date of filing: **28.12.2007**

(51) Int Cl.:
*C08F 265/08* (2006.01)      *C08F 279/04* (2006.01)
*C08F 279/02* (2006.01)      *C08L 27/06* (2006.01)
*C08L 55/02* (2006.01)      *C08L 51/04* (2006.01)
*F16L 11/04* (2006.01)

(86) International application number:
**PCT/JP2007/075275**

(87) International publication number:
**WO 2008/081926 (10.07.2008 Gazette 2008/28)**

(54) **COMPOSITION FOR OIL-RESISTANT WEATHER-RESISTANT RUBBER, AND RUBBER MOLDED BODY**

ZUSAMMENSETZUNG FÜR ÖLFESTEN WETTERFESTEN KAUTSCHUK UND KAUTSCHUKFORMKÖRPER

COMPOSITION POUR CAOUTCHOUC RÉSISTANT AUX INTEMPÉRIES ET RÉSISTANT À L'HUILE ET CORPS MOULÉ DE CAOUTCHOUC

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006354975**

(43) Date of publication of application:
**09.09.2009 Bulletin 2009/37**

(73) Proprietor: **JSR Corporation**
**Tokyo 104-8410 (JP)**

(72) Inventors:
• **TSUNEYOSHI, Minoru**
**Chuo-ku**
**Tokyo 104-8410 (JP)**
• **SAWADA, Yukihiro**
**Chuo-ku**
**Tokyo 104-8410 (JP)**
• **TOYOSHIMA, Tsukasa**
**Chuo-ku**
**Tokyo 104-8410 (JP)**
• **HASEGAWA, Kenji**
**Chuo-ku**
**Tokyo 104-8410 (JP)**
• **TADAKI, Toshihiro**
**Chuo-ku**
**Tokyo 104-8410 (JP)**

(74) Representative: **TBK**
**Bavariaring 4-6**
**80336 München (DE)**

(56) References cited:
EP-A1- 0 779 300     EP-A2- 1 184 414
WO-A1-00/26292     JP-A- 09 095 582
JP-A- 2001 317 663     JP-A- 2001 323 129
JP-A- 2003 343 770     US-A- 5 629 397

**Description**

The present invention relates to a composition for oil-resistant weather-resistant rubber, containing polymer for oil-resistant rubber; and a rubber molded article obtained from the composition for oil-resistant weather-resistant rubber.

Rubber products made of an unsaturated nitrile-conjugated diene copolymer such as acrylonitrile-butadiene copolymer rubber (NBR) are characterized by the superior oil resistance. Therefore, they are being suitably used as a constituent material for various members requiring oil resistance, such as hose for automobile fuel, seal, packing, gasket.

However, in these days, environmental problems have become serious and a rubber material superior not only in oil resistance but also in fuel non-permeability is required for the purpose of, for example, prevention of gasoline vaporization into the air. As the rubber material superior in fuel non-permeability, there is disclosed, for example, a polyblend composition containing a nitrile rubber whose $\alpha,\beta$-unsaturated nitrile content is controlled at a particular level or higher, a vinyl chloride resin, and a plasticizer of an alkanedicarboxylic acid (having carbon atoms of given range) ether ester type (see, for example, Patent Document 1).

Patent Document 1: WO 00/26292 Pamphlet

In the Patent Document 1, it is described that since the polyblend composition uses the particular plasticizer as mentioned above, the composition is improved not only in gasoline non-permeability (that is, fuel non-permeability) but also in cold resistance (which is a property not consistent with gasoline non-permeability) and is well balanced between gasoline non-permeability and cold resistance.

However, the polyblend composition is not fully satisfactory in fuel non-permeability and has had a room for improvement. Further, EP 0779300 discloses a saturated nitrile-conjugated diene copolymer obtained by copolymerizing acrylonitrile with butadiene in the presence of a free radical initiator. A part of the monomers is incorporated in a monomer charge before polymerization, and the remainder thereof is added in a polymerization mixture during polymerization. US 5629397 discloses that 2,6-dimethylphenylmaleimide is used as a comonomer for the preparation of styrene copolymers and vinyl chloride copolymers having an increased glass transition temperature. Further, EP 1184414 describes a conjugated diene-based rubber having a specific composition and a method of producing the same, an oil extended rubber using the same, as well as a rubber composition capable of being converted into a vulcanized rubber. An oil extended rubber in the invention comprises 100 parts by mass of the conjugated diene-based rubber and 10 to 60 parts by mass of an extending oil. The rubber composition comprises a rubber component containing a conjugated diene-based rubber, and an inorganic filler such as a silica and/or a carbon black. Thus, at present, no oil-resistant rubber has been found out yet which has sufficiently satisfactory fuel non-permeability and can effectively prevent fuel vaporization, and it is aimed to develop such an oil-resistant rubber.

The present invention has been made in view of the above-mentioned problem of prior art. The present invention aims at providing a composition for manufacturing by a method for producing a polymer for oil-resistant rubber, capable of giving a rubber molded article which has sufficiently satisfactory fuel non-permeability and can effectively prevent fuel vaporization.

The present inventors made a study in order to achieve the above aim. As a result, the present inventors thought of that the above aim could be achieved by, in modifying an unsaturated nitrile-conjugated copolymer, polymerizing a compound for modification, in a state that the amount of the conjugated diene monomer present in the polymerization system was controlled at a predetermined ratio or lower, and the present invention has been completed.

The present invention relates to a composition for oil-resistant weather resistant rubber according to claim 1, a rubber molded article according to claim 3 and a hose or seal according to claim 4. Further beneficial embodiment is set forth in the dependent claim 2.

[1] The composition according to the present invention is manufactured by a method for producing a polymer for oil-resistant rubber, which comprises adding, to an aqueous dispersion of an unsaturated nitrile-conjugated diene copolymer (component A), a monomer composition (component B) containing at least one kind of monomer selected from the group consisting of a nitrile group-containing monomer (component B-1), a (meth)acrylic acid ester monomer (component B-2) and an aromatic vinyl compound monomer (component B-3), and conducting a polymerization reaction in a state that the ratio of the conjugated diene monomer present in the system, to the total monomers present in the system is controlled at 10 mol % or less.

[2] The composition according to the present invention is preferably manufactured by a method for producing a polymer for oil-resistant rubber, according to [1], wherein a monomer composition containing at least acrylonitrile and styrene is used as the monomer composition (component B).

[3] The composition according to the present invention is preferably manufactured by a method for producing a polymer for oil-resistant rubber, according to [1] or [2], wherein 80 to 2 parts by mass of the monomer composition (component B) is added to 20 to 98 parts by mass of the unsaturated nitrile-conjugated diene copolymer (component A) with a proviso that the sum of the component A and the component B is 100 parts by mass.

[4] The composition according to the present invention is preferably manufactured by a method for producing a polymer for oil-resistant rubber, according to any one of [1] to [3], wherein there is used, as the unsaturated nitrile-conjugated diene copolymer (component A), a copolymer containing 10 to 60 mass % of a structural unit (unit A-1) derived from acrylonitrile, 10 to 90 mass % of a structural unit (unit A-2) derived from butadiene and 0 to 80 mass % of other monomer unit (unit A-3) with a proviso that the sum of the unit A-1, the unit A-2 and the unit A-3 is 100 mass %.

[7] A composition for oil-resistant weather-resistant rubber, which contains 100 parts by mass of a polymer for oil-resistant rubber and 3 to 300 parts by mass of a vinyl chloride resin having an average polymerization degree of 550 or more.

[8] The composition for oil-resistant weather-resistant rubber, according to [7], which further contains a reinforcing agent, a plasticizer and a crosslinking agent.

[9] A rubber molded article obtained from a composition for oil-resistant weather-resistant rubber, according to [7] or [8].

[10] A hose or seal obtained from a composition for oil-resistant weather-resistant rubber, according to [7] or [8].

According to the method for producing a polymer for oil-resistant rubber there can be produced a polymer for oil-resistant rubber, capable of giving a rubber molded article which has sufficiently satisfactory fuel non-permeability and can effectively prevent fuel vaporization. The rubber molded article, hose and seal of the present invention can be obtained from the composition for oil-resistant weather-resistant rubber, of the present invention and are therefore superior not only in fuel non-permeability but also in weather resistance and cold resistance.

BEST MODE FOR CARRYING OUT THE INVENTION

The best mode for carrying out the present invention is described below. However, the present invention is not restricted to the following embodiments, and it should be construed that the following embodiments can be subjected to appropriate changes, modifications, etc. based on the ordinary knowledge possessed by those skilled in the art as long as there is no deviation from the gist of the present invention and that even such changed or modified embodiments fall in the scope of the present invention.

A method for producing a polymer for oil-resistant rubber comprises adding, to an aqueous dispersion of an unsaturated nitrile-conjugated diene copolymer (component A), a monomer composition (component B) containing at least one kind of monomer selected from the group consisting of a nitrile group-containing monomer (component B-1), a (meth)acrylic acid ester monomer (component B-2) and an aromatic vinyl compound monomer (component B-3), and conducting a polymerization reaction in a state that the ratio of the conjugated diene monomer present in the system, to the total monomers present in the system is controlled at 10 mol % or less.

In the production method, in order to modify an unsaturated nitrile-conjugated diene copolymer, a modification reaction can be allowed to proceed sufficiently by polymerizing a compound for modification in a state that the ratio of the conjugated diene monomer present in the system is controlled at a particular level or lower; as a result, there can be produced a polymer for oil-resistant rubber, capable of giving a rubber molded article which has sufficiently satisfactory fuel non-permeability and can effectively prevent fuel vaporization. Specific description is made below.

[1-1] Production of unsaturated nitrile-conjugated diene copolymer (component A)

In the production method, an unsaturated nitrile-conjugated diene copolymer is used as a raw material for the polymer for oil-resistant rubber. This "unsaturated nitrile-conjugated diene copolymer" is a copolymer containing at least a structural unit derived from an unsaturated nitrile, i.e. an unsaturated nitrile unit and a structural unit derived from a conjugated diene, i.e. a conjugated diene unit. By producing a polymer for oil-resistant rubber using this component A as a raw material, the rubber molded article obtained from the polymer has superior rubber elasticity and flexibility. The component A can be produced, for example, by copolymerizing an unsaturated nitrile, a conjugated diene and, as necessary, other monomer in the presence of a radical polymerization initiator.

[1-1(1)] Unsaturated nitrile

In the present Description, the "unsaturated nitrile" refers to a compound having a polymerizable double bond and a nitrile group (cyano group). Specifically, there can be mentioned (meth)acrylonitriles such as acrylonitrile, meth-acrylonitrile, $\alpha$-ethyl acrylonitrile, methyl $\alpha$-isopropyl acrylonitrile, methyl $\alpha$-n-butyl acrylonitrile and the like; cyano group-containing (meth)acrylic acid esters such as 2-cyanoethyl (meth)acrylate, 2-(2-cyanoethoxy)ethyl (meth)acrylate, 3-(2-cyanoethoxy)propyl (meth)acrylate, 4-(2-cyanoethoxy)butyl (meth) acrylate, 2-[2-(2-cyanoethoxy)ethoxy]ethyl (meth) acrylate ; fumaronitrile; 2-methylene glutaronitrile; and so forth.

As to the kind of the unsaturated nitrile, there is no particular restriction. However, acrylonitrile is preferably used because the polymer obtained gives a rubber molded article of improved oil resistance. Incidentally, the component A may be a polymer containing only one kind of unsaturated nitrile unit or a polymer containing two or more kinds of unsaturated nitrile units.

[1-1(2)] Conjugated diene

In the present Description, the "conjugated diene" refers to a compound containing a structure in which two carbon-carbon double bonds are bonded by one carbon-carbon single bond. Specifically, there can be mentioned 1,3-butadiene, isoprene (2-methyl-1,3-butadiene), 2,3-dimethyl-1,3-butadiene, chloroprene (2-chloro-1,3-butadiene).
As to the kind of the conjugated diene, there is no particular restriction. However, 1,3-butadiene, isoprene or 1,3-pentadiene is selected preferably because the polymer obtained gives a rubber molded article of improved cold resistance, and 1,3-butadiene or isoprene is selected preferably. Incidentally, the component A may be a polymer containing only one kind of conjugated diene unit or a polymer containing two or more kinds of conjugated diene units.

[1-1(3)] Other monomer

The component A may contain a repeating unit (other structural unit) derived from a monomer (other monomer) other than the unsaturated nitrile and the conjugated diene. The "other monomer" is sufficient if it is a compound which contains a polymerizable double bond and which is copolymerizable with the unsaturated nitrile and the conjugated diene. Specifically, there can be mentioned a (meth)acrylic acid ester monomer (component B-2) described later, an aromatic vinyl compound monomer (component B-3) described later.
As to the kind of the other monomer, there is no restriction. However, there is preferably selected styrene, $\alpha$-methylstyrene, o-methylstyrene, m-methylstyrene, p-methylstyrene or p-tert-butylstyrene because they are superior in polymerization reactivity, and styrene is selected more preferably. Incidentally, the component A may be a polymer containing only one kind of "other structural unit" or a polymer containing two or more kinds of "other structural units".

[1-1(4)] Contents of individual structural units

When the component A is constituted only by the unsaturated nitrile unit and the conjugated diene unit, the mass ratio of the unsaturated nitrile unit to the total mass of all the constituent units is preferably 10 to 60 mass %. When the mass ratio is 10 mass % or higher, the polymer obtained can give a rubber molded article having sufficient oil resistance. When the mass ratio is 60 mass % or lower, the content of the conjugated diene unit increases correspondingly and the polymer obtained can give a rubber molded article having sufficient rubber elasticity and flexibility.
Meanwhile, the mass ratio of the conjugated diene unit to the total mass of all the constituent units is preferably 40 to 90 mass %. When the mass ratio is 40 mole % or higher, the polymer obtained can give a rubber molded article having sufficient rubber elasticity and flexibility. When the mass ratio is 90 mass % or lower, the content of the unsaturated nitrile unit increases correspondingly and the polymer obtained can give a rubber molded particle having sufficient oil resistance.
When the component A is constituted only by the unsaturated nitrile unit and the conjugated diene unit, acrylonitrile is preferably selected as the unsaturated nitrile and butadiene is preferably selected as the conjugated diene. Therefore, the component A is preferably an acrylonitrile-butadiene rubber.
When the component A contains the other structural unit in addition to the unsaturated nitrile unit and the conjugated diene unit, the mass ratio of the other structural unit to the total mass of all the structural units is preferably 80% or lower. When the mass ratio is 80% or lower, the polymer obtained can give a rubber molded article having properties derived from the other structural unit without reducing the oil resistance, rubber elasticity, flexibility.
In this case, the mass ratio of the unsaturated nitrile unit to the total mass of all the structural units is preferably 10 to 60 mass % in order to secure the oil resistance, rubber elasticity, flexibility, of rubber molded article. Meanwhile, the mass ratio of the conjugated diene unit to the total mass of all the structural units is preferably 10 to 90 mass %.
When the component A contains the other structural unit in addition to the unsaturated nitrile unit and the conjugated diene unit, it is preferred that acrylonitrile is selected as the unsaturated nitrile, butadiene is selected as the conjugated diene, and a (meth)acrylic acid ester is selected as the other monomer. Therefore, the component A is preferably an acrylonitrile-butadiene-(meth)acrylic acid ester rubber.

[1-1(5)] Polymerization

As described previously, the component A can be produced, for example, by copolymerizing an unsaturated nitrile, a conjugated diene and, as necessary, other monomer in the presence of a radical polymerization initiator.
As the radical polymerization initiator, there can be mentioned azo compounds such as azobisisobutyronitrile and the like; organic peroxides such as benzoyl peroxide, lauroyl peroxide, tert-butyl hydroperoxide, cumene hydroperoxide, paramenthane hydroperoxide, di-tert-butyl peroxide, dicumyl peroxide ; inorganic peroxides such as potassium persulfate ; redox catalysts which are a combination of the above-mentioned peroxide and a reducing agent(e.g. ferrous sulfate); and so forth. These radical polymerization initiators may be used singly in one kind or in combination of two or more kinds.

The use amount of the radical polymerization initiator is preferably 0.001 to 2 parts by mass relative to 100 parts by mass of the total monomers. As the method for polymerization, there can be employed a known method such as bulk polymerization, solution polymerization, suspension polymerization, emulsion polymerization. Of these, emulsion polymerization is referred particularly.

As the emulsifier used in the emulsion polymerization, there can be mentioned an anionic surfactant, a nonionic surfactant, a cationic surfactant, an amphoteric surfactant. Also, a fluorine-based surfactant may be used. Of the above emulsifiers, an anionic surfactant can be used preferably. More specifically, a sulfonic acid salt, a salt of a long chain fatty acid of 10 or more carbon atoms, a resin acid salt, are used preferably; of them, a potassium salt, a sodium salt or a combination thereof is used more preferably. As to other emulsifiers, only one kind may be used singly or two or more kinds may be used in combination.

In the polymerization, a chain transfer agent may be used in order to control the molecular weight of the component A. As the chain transfer agent, there can be used, for example, alkylmercaptans such as tert-dodecylmercaptan, n-dodecylmercaptan ; carbon tetrachloride, thioglycols; diterpene, terpinolene and γ-terpinenes.

The monomers (e.g. unsaturated nitrile and conjugated diene), the emulsifier, the radical polymerization initiator, the chain transfer agent, may be added into a reactor all amounts at once and then polymerization may be started; or, additional amounts may be added in the course of the reaction continuously or intermittently. The polymerization may be conducted continuously or batch-wise. The polymerization reaction is preferably conducted in an oxygen-removed reactor. The temperature of the polymerization reaction is preferably 0 to 100°C, more preferably 0 to 80°C. The addition methods of raw materials, the reaction conditions (e.g. temperature and stirring) may be changed appropriately in the course of the polymerization reaction.

The time of the polymerization reaction is ordinarily about 0.01 to 30 hours. The termination of the polymerization reaction can be conducted, for example, by adding a polymerization terminator when an intended polymerization conversion has been reached. As the polymerization terminator, there can be used, for example, amine compounds such as hydroxylamine, N,N-diethylhydroxylamine ; and quinone compounds such as hydroquinone.

After the termination of the polymerization reaction, unreacted monomers are as necessary removed from the formed emulsion (latex) by steam distillation. By thus reducing the amount of the unreacted conjugated diene monomer in the component A, it is possible to control the amount of conjugated diene monomer when the component B is added, at 10 mol % or less.

Incidentally, in the production method, the modification of the component A is conducted in an aqueous dispersion of the component A, as described later; therefore, the formed emulsion per se may be used in the modification. It is also possible to conduct a modification reaction without removing the unreacted monomers (in a state that the unreacted monomers remain), as long as the molar fraction of the conjugated diene monomer can be controlled in a predetermined range.

[1-2] Modification of component A using monomer composition (component B)

Next, the modification of the component A is conducted using a monomer composition (component B). Specifically explaining, there is added, to an aqueous dispersion of the component A, a monomer composition (component B) containing at least one kind of monomer selected from the group consisting of a nitrile group-containing monomer (component B-1), a (meth)acrylic acid ester monomer (component B-2) and an aromatic vinyl compound monomer (component B-3), and a polymerization reaction is conducted in a state that the ratio of the conjugated diene monomer present in the system, to the total monomers present in the system is controlled at 10 mol % or less, whereby an oil-resistant rubber is obtained.

[1-2(1)] Aqueous dispersion of unsaturated nitrile-conjugated diene copolymer (component A)

The aqueous dispersion of the component A may be produced by any method as long as the component A is dispersed in water (which is a medium). However, it is preferred to use an emulsion of the component A, obtained by emulsion polymerization of unsaturated nitrile, conjugated diene. As such an emulsion, there may be used one in which unreacted monomers have been removed by steam distillation, or there may be used one in which unreacted monomers are not removed (unreacted monomers remain) as long as the molar fraction of the conjugated diene monomer can be controlled in a predetermined range.

[1-2(2)] Nitrile group-containing monomer (component B-1)

As the monomer for modifying the component A, a nitrile group-containing monomer can be used. As the nitrile group-containing monomer, the " unsaturated nitrile" mentioned in the section of production of the component A can be used preferably. In particular, acrylonitrile is used preferably because the polymer obtained can give a rubber molded article of improved oil resistance.

[1-2(3)] (Meth)acrylic acid ester monomer (component B-2)

As the monomer for modifying the component A, a (meth)acrylic acid ester monomer may be used as well. The (meth)acrylic acid ester monomer has no particular restriction as to the structure as long as it is an ester between (meth) acrylic acid and an alcohol. Representative examples of the (meth)acrylic acid ester monomer are mentioned below:
alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-amyl (meth)acrylate, n-hexyl (meth)acrylate, 2-ethylhexyl (meth)acrylate, n-octyl (meth)acrylate, lauryl (meth)acrylate, stearyl (meth)acrylate ;
fluoroalkyl (meth)acrylates such as 2,2,2-trifluoroethyl (meth)acrylate, 3,3,3,2,2-pentafluoropropyl (meth)acrylate, 4,4,4,3,3,2,2-heptafluorobutyl (meth)acrylate ;
alkoxyalkyl (meth)acrylates such as 2-methoxyethyl (meth)acrylate, 2-ethoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate;
(meth)acrylates of alkoxypolyalkylene glycols (the number of alkylene glycol units: about 2 to 23) such as methoxypolyethylene glycol, ethoxypolyethylene glycol, methoxypolypropylene glycol, ethoxypolypropylene glycol and the like; aryloxyalkyl (meth)acrylates such as 2-phenoxyethyl (meth)acrylate, 2-phenoxypropyl (meth)acrylate, 3-phenoxypropyl (meth) acrylate ;
mono(meth)acrylates of aryloxypolyalkylene glycols (the number of alkylene glycol units: ordinarily 2 to 23) such as phenoxypolyethylene glycol, phenoxypolypropylene glycol ; cyanoalkyl (meth)acrylates such as 2-cyanoethyl (meth)acrylate, 2-cyanopropyl (meth)acrylate, 3-cyanopropyl (meth)acrylate ; mono- or di-(meth)acrylates of alkylene glycols such as ethylene glycol, 1,2-propanediol, 1,3-propanediol, 3-chloro-1,2-propanediol, 1,2-butanediol, 1,3-butanediol, 1,4-butanediol, 1,5-pentanediol, 1,6-hexanediol ;
mono- or di-(meth)acrylates of polyalkylene glycols (the number of alkylene glycol units: ordinarily 2 to 23) such as polyethylene glycol, polypropylene glycol ; mono- or oligo-(meth)acrylates of trihydric or higher polyalcohols such as glycerine, 1,2,4-butanetriol, pentaerythritol, trimethylolalkane (the carbon atoms of alkane: ordinarily 1 to 3), tetramethylolalkane (the carbon atoms of alkane: ordinarily 1 to 3) ; mono- or oligo-(meth)acrylates of polyalkylene glycol adducts (the number of alkylene glycol units: ordinarily 2 to 23) of the above-mentioned trihydric or higher polyalcohols;
mono- or oligo-(meth)acrylates of cyclic polyols such as 4-cyclohexanediol, 1,4-benzenediol, 1,4-di-(2-hydroxyethyl)benzene ; dialkylaminoalkyl (meth)acrylates such as dimethylaminomethyl (meth)acrylate, diethylaminomethyl (meth)acrylate, 2-dimethylaminoethyl (meth)acrylate, 2-diethylaminoethyl (meth)acrylate, 2-dimethylaminopropyl (meth) acrylate, 2-diethylaminopropyl (meth)acrylate, 2-(di-n-propylamino)propyl (meth)acrylate, 3-dimethylaminopropyl (meth) acrylate, 3-diethylaminopropyl (meth)acrylate, 3-(di-n-propylamino)propyl (meth)acrylate ;
carboxyl group-esterified (meth)acrylates such as 2-(dimethylaminoethoxy)ethyl (meth)acrylate, 2-(diethylaminoethoxy)ethyl (meth)acrylate ; and lactone-modified (meth)acrylates.
Of these, there are preferably used alkoxyalkyl (meth)acrylates having an alkoxy group of 1 to 4 carbon atoms and alkyl (meth)acrylates of 2 to 6 carbon atoms. Alkyl (meth)acrylates of 2 to 6 carbon atoms are used more preferably. These (meth)acrylic acid ester monomers may be used singly in one kind or in combination of two or more kinds.

[1-2(4)] Aromatic vinyl compound monomer (component B-3)

As the monomer for modifying the component A, an aromatic vinyl compound monomer may be used as well. In the present Description, the "aromatic vinyl compound monomer" refers to a compound having a polymerizable double bond and an aromatic ring structure. There is no restriction as to other structure. There can be mentioned, for example, styrene, $\alpha$-methylstyrene, o-methylstyrene, m-methylstyrene, p-methylstyrene, p-tert-butylstyrene, o-methoxystyrene, m-methoxystyrene and p-methoxystyrene. Of these, styrene is used preferably because it is superior in polymerization reactivity.

[1-2(5)] Other monomer

The component B may contain a monomer (other monomer) other than the nitrile group-containing monomer, the (meth)acrylic acid ester monomer and the aromatic vinyl compound monomer. The "other monomer" is sufficient if it is a compound having a polymerizable double bond and capable of copolymerizing with the nitrile group-containing monomer, the (meth)acrylic acid ester monomer or the aromatic vinyl compound monomer.

It is preferred to use, as the component B, a monomer composition containing at least the component B-1 and the component B-3 because the polymer obtained can give a rubber molded article of improved oil resistance. More specifically, it is preferred to use a monomer composition containing acrylonitrile as the component B-1 and styrene as the component B-3.

[1-2(6)] Ratio to component A

As to the ratio of the component B to the component A, the component B is preferably 80 to 2 parts by mass relative to 20 to 98 parts by mass of the component A (in this case, the component A + the component B = 100 parts by mass), more preferably 50 to 5 parts by mass relative to 50 to 95 parts by mass of the component A. By using the component B in an amount of 2 parts by mass or more, the polymer obtained can give a rubber molded article having superior oil resistance and ozone resistance. Meanwhile, by using the component B in an amount of 80 parts by mass or less, the polymer obtained can give a rubber molded article having superior cold resistance.

When, as mentioned above, there is used, as the component B, a monomer composition containing acrylonitrile and styrene, it is preferred that acrylonitrile is used in an amount of 1 to 300 parts by mass and styrene is used in an amount of 1 to 300 parts by mass, relative to 100 parts by mass of the component A.

[1-2(7)] Modification reaction

In the production method, a polymerization reaction is conducted in a state that, when the component B has been added to the component A, the ratio of the conjugated diene monomer present in the system, to the total monomers present in the system, is controlled at 10 mol % or lower. "The total monomers present in the system" include not only the component B (monomer composition) added to the component A, but also the unreacted monomers remaining in the component A. By thus controlling the ratio of the conjugated diene monomer precisely in conducting the modification reaction, a rubber molded article having sufficient fuel non-permeability and ozone resistance can be obtained.

In order to obtain such an effect reliably, the ratio of the conjugated diene monomer is preferably 10 mol % or lower, more preferably 5 mol % or lower. The ratio of the conjugated diene monomer can be calculated from the residual amount of unreacted conjugated diene monomer at the completion of component A production and the amount of the component B added. The residual amount of unreacted conjugated diene monomer is calculated from the analytical value of gas chromatography at the completion of component A production or after the removal of unreacted monomers.

The modification reaction can be conducted by ordinary emulsion polymerization and is preferably conducted in an oxygen-removed reactor at a temperature condition of 0 to 50°C. The polymerization may be conducted continuously or batch-wise. The monomers, the emulsifier, the polymerization initiator, the molecular weight modifier and other polymerization reagents may be added in total amounts before the start of the reaction, or may be appropriately added in portions after the start of the reaction; and the operating conditions such as temperature, stirring can be changed as required, in the course of the reaction.

[2] Polymer for oil-resistant rubber

A polymer for oil-resistant rubber is a polymer obtained by the above-described production method. The polymer is obtained by subjecting an unsaturated nitrile-conjugated diene copolymer to a modification reaction using a nitrile group-containing monomer and a (meth)acrylic acid ester monomer, under given conditions; therefore, the polymer can give a rubber molded article having sufficiently satisfactory fuel non-permeability.

The polymer for oil-resistant rubber has a Mooney viscosity ($ML_{1+4}$, 100°C) of preferably 10 to 200, more preferably 20 to 200. By allowing the polymer to have a Mooney viscosity of 10 or higher, the rubber molded article obtained from the polymer can have a sufficient strength and, by allowing the polymer to have a Mooney viscosity of 200 or lower, the processability when the polymer is kneaded to obtain a rubber composition, can be increased.

[3] Composition for oil-resistant weather-resistant rubber

The composition for oil-resistant weather-resistant rubber, of the present invention contains 100 parts by mass of the above-described polymer for oil-resistant rubber and 3 to 300 arts by mass of a vinyl chloride resin having an average polymerization degree of 550 or more. By mixing a vinyl chloride resin having a given average polymerization degree, into the polymer for oil-resistant rubber, there can be obtained a rubber molded article superior not only in oil resistance and fuel non-permeability but also in weather resistance and cold resistance.

[3-1] Particular vinyl chloride resin

The "vinyl chloride resin" is a polymer containing at least a structural unit (a vinyl chloride unit) derived from vinyl chloride. Therefore, the "vinyl chloride resin" may be a homopolymer of vinyl chloride or a copolymer of vinyl chloride and other monomer.

As the monomer copolymerizable with vinyl chloride, there can be mentioned, for example, $\alpha$-olefins such as ethylene, propylene ; vinyl esters such as vinyl acetate, vinyl stearate and the like; vinyl ethers such as methyl vinyl ether, lauryl vinyl ether ; (meth)acrylic acid esters such as methyl acrylate, methyl methacrylate ; amides and nitriles such as methacrylamide, acrylonitrile ; styrenes such as styrene, $\alpha$-methylstyrene ; and polyfunctional monomers such as diallyl phthalate, ethylene glycol dimethacrylate.

As the "vinyl chloride resin", there is used one having an average polymerization degree of 550 or more. By using a vinyl chloride resin having an average polymerization degree of 550 or more, the rubber molded article obtained has superior ozone resistance. There is no particular restriction as to the upper limit of the average polymerization degree; however, use of a vinyl chloride resin having an average polymerization degree of 5,000 or less is preferred because the rubber molded article obtained is improved in processability.

The vinyl chloride resin may be produced by any method as long as the produced vinyl chloride resin satisfies the above-mentioned condition of average polymerization degree. There can be used a vinyl chloride resin produced by a known method such as bulk polymerization, suspension polymerization, emulsion polymerization, solution polymerization. Use of, in particular, a powdery vinyl chloride resin obtained by suspension polymerization is preferred.

The ratio of the vinyl chloride resin relative to the oil-resistant rubber is 3 to 300 parts by mass relative to 100 parts by mass of the polymer for oil-resistant rubber. By using the vinyl chloride resin in an amount of 3 parts by mass or more, the rubber molded article obtained has superior ozone resistance. Meanwhile, by using the vinyl chloride resin in an amount of 300 parts by mass or less, the rubber molded article can keep good compression set. In order to obtain these effects reliably, the vinyl chloride resin is used preferably in an amount of 5 to 200 parts by mass, more preferably in an amount of 10 to 100 parts by mass, relative to 100 parts by mass of the polymer for oil-resistant rubber.

[3-2] Other polymer component

The composition for oil-resistant weather-resistant rubber, of the present invention may contain other polymer component, in addition to the polymer for oil-resistant rubber and the vinyl chloride resin. As the other polymer component, there can be mentioned natural rubber, butadiene rubber, isoprene rubber, chloroprene rubber, styrenebutadiene copolymer rubber, butadiene-isoprene copolymer rubber, butadiene-styrene-isoprene copolymer rubber, acrylonitrile-butadiene copolymer rubber, acrylic rubber, butyl rubber. The proportion of the "other polymer component" is preferably 0 to 30 parts by mass, more preferably 0 to 10 parts by mass, relative to 100 parts by mass of the polymer for oil-resistant rubber.

[3-3] Additives

The composition for oil-resistant weather-resistant rubber, of the present invention may contain various additives which may be added to rubber compositions. The composition for oil-resistant weather-resistant rubber, of the present invention preferably contains a reinforcing agent, a plasticizer and a crosslinking agent.

[3-3(1)] Reinforcing agent

The reinforcing agent is an additive for imparting toughness to the rubber molded article. By adding the reinforcing agent to the composition for oil-resistant weather-resistant rubber, of the present invention, a rubber molded article of high strength can be obtained.

As the reinforcing agent, there can be mentioned, for example, carbon black, silica, aluminum hydroxide and alumina. Of these, carbon black is preferred because it gives a high reinforcing effect. These reinforcing agents may be used singly in one kind or in combination of two or more kinds.

As the carbon black, there can be mentioned SAF carbon black, ISAF carbon black, HAF carbon black, FEF carbon black, GPF carbon black, SRF carbon black, FT carbon black, MT carbon black, acetylene black, Ketjen black.

The use amount of the reinforcing agent is preferably 5 to 200 parts by mass, more preferably 10 to 100 parts by mass, relative to 100 parts by mass of the polymer for oil-resistant rubber. By using the reinforcing agent in an amount of 5 parts by mass or more, the rubber molded article obtained can have a high strength. Meanwhile, by using the reinforcing agent in an amount of 200 parts by mass or less, the rubber molded article obtained can have good processability reliably.

[3-3(2)] Plasticizer

The plasticizer is an additive for imparting cold resistance to the rubber molded article. Therefore, by adding the plasticizer to the composition for oil-resistant weather-resistant rubber, of the present invention, there can be obtained a rubber molded article which is high in flexibility even at low temperatures.

As the plasticizer, there can be mentioned phthalic acid esters such as dimethyl phthalate, diethyl phthalate, dibutyl phthalate, diisobutyl phthalate, dioctyl phthalate, butyl octyl phthalate, di-(2-ethylhexyl) phthalate, diisooctyl phthalate, diisodecyl phthalate ; fatty acid esters such as dimethyl adipate, diisobutyl adipate, di-(2-ethylhexyl) adipate, diisooctyl adipate, diisodecyl adipate, octyl decyl adipate, di-(2-ethylhexyl) azelate, diisooctyl azelate, diisobutyl azelate, dibutyl sebacate, di-(2-ethylhexyl) sebacate, diisooctyl sebacate ; trimellitic acid esters such as isodecyl trimellitate, octyl trimellitate, n-octyl trimellitate, isonoyl trimellitate and the like; di-(2-ethylhexyl) fumarate; diethylene glycol mono-oleate; glyceryl mono-ricinolate; trilauryl phosphate; tristearyl phosphate; tri-(2-ethylhexyl) phosphate; epoxidized soybean oil; polyetherester. These plasticizers may be used singly in one kind or in combination of two or more kinds.

The use amount of the plasticizer is preferably 0 to 80 parts by mass, more preferably 10 to 60 parts by mass, relative to 100 parts by mass of the polymer for oil-resistant rubber. By using the plasticizer in an amount of 0 parts by mass or more, the rubber molded article obtained can have superior cold resistance. Meanwhile, by using the plasticizer in an amount of 80 parts by mass or less, the rubber molded article obtained can have superior gasoline non-permeability and, moreover, the reduction in strength, caused by addition of the plasticizer can be suppressed.

[3-3(3)] Crosslinking agent

The crosslinking agent is an additive for imparting rubber elasticity and toughness to the rubber molded article. Therefore, by adding the crosslinking agent to the composition for oil-resistant weather-resistant rubber, of the present invention, there can be obtained a rubber molded article having a high strength and superior elasticity.

As the crosslinking agent, sulfur, an organic peroxide, can be mentioned. Sulfur is preferred. As the sulfur, there can be mentioned powdered sulfur, precipitated sulfur, colloidal sulfur, surface-treated sulfur, insoluble sulfur. When sulfur is used as the crosslinking agent, the use amount thereof is preferably 0.05 to 5 parts by mass, more preferably 0.1 to 3 parts by mass, relative to 100 parts by mass of the polymer for oil-resistant rubber. By using the crosslinking agent in an amount of 0.05 part by mass or more, a preferred effect of strength can be obtained. Meanwhile, by using the crosslinking agent in an amount of 5 parts by mass or less, the reduction in processability in the rubber molded article obtained can be suppressed.

When sulfur is used as the crosslinking agent, it is preferred to use, in combination with the sulfur, a crosslinking aid (this may hereinafter be referred to as "vulcanization accelerator"). As the vulcanization accelerator, there can be mentioned, for example, sulfenamide compounds such as N-cyclohexyl-2-benzothiazolyl sulfenamide, N-oxydiethylene-2-benzothiazolyl sulfenamide, N,N-diisoproyl-2-benzothiazolyl sulfenamide ; thiazole compounds such as 2-mercaptobenzothiazole, 2-(2',4'-dinitrophenyl)mercaptobenzothiazole, 2-(4'-morpholinodithio)benzothiazole, dibenzothiazyl disulfide ; guanidine compounds such as diphenylguanidine, diorthotolylguanidine, diorthonitrileguanidine, orthonitrile biguanide, diphenylguanidine phthalate ; aldehydeamine or aldehyde-ammonia compounds such as acetaldehyde-aniline reaction product, butylaldehyde-aniline condensation product, hexamethylenetetramine, acetaldehyde ammonia ; imidazoline compounds such as 2-mercaptoimidazoline ; thiourea compounds such as thiocarbanilide, diethylthiourea, dibutylthiourea, trimethylthiourea, diorthotolylthiourea ; thiuram compounds such as tetramethylthiuram monosulfide, tetramethylthiuram disulfide, tetraethylthiuram disulfide, tetrabutylthiuram disulfide, tetraoctylthiuram disulfide, pentamethylenethiuram tetrasulfide ; dithioic acid salt compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, tellurium dimethyldithiocarbamate ; zanthogenate compounds such as zinc dibutylxanthogenate ; and inorganic zinc compounds such as zinc white, activated zinc white, surface-treated zinc white, zinc carbonate, composite zinc white, composite active zinc white. These crosslinking agents may be used singly in one kind or in combination of two or more kinds.

As the organic peroxide, there can be mentioned t-butyl hydroperoxide, 1,1,3,3-tetramethylbutyl hydroperoxide, p-menthane hydroperoxide, cumene hydroperoxide, diisopropylbenzene hydroperoxide, 2,5-dimethylhexane-2,5-dihydroperoxide, 1,1-di-t-butylperoxy-3,3,5-trimethylcyclohexane, di-t-butyl peroxide, t-butyl cumyl peroxide, dicumyl peroxide, 1,1-bis(t-butylperoxy)cyclododecane, 2,2-bis(t-butylperoxy)octane, 1,1-di-t-butylperoxycyclohexane, 2,5-dimethyl-2,5-di-(t-butylperoxy)hexane, 2,5-dimethyl-2,5-di-(t-butylperoxy)hexyne, 1,3bis(t-butylperoxy-isopropyl)benzene, 2,5-dimethyl-2,5-di-(benzoylperoxy) hexane, 1,1-bis(t-butylperoxy)-3,3,5-trimethylcyclohexane, n-butyl-4,4-bis(t-butylperoxy)valerate, benzoyl peroxide, m-toluyl peroxide, p-chlorobenzoyl peroxide, 2,4-dichlorobenzoyl peroxide, t-butyl peroxyisobutylate, t-butyl peroxy-2-ethylhexanoate, t-butyl peroxybenzoate, t-butyl peroxyisopropylcarbonate, t-butyl peroxyallylcarbonate, These plasticizers may be used singly in one kind or in combination of two or more kinds. These crosslinking agents may be used singly in one kind or in combination of two or more kinds.

When an organic peroxide is used as the crosslinking agent, the use amount of the organic peroxide is preferably 0.2 to 5 parts by mass, more preferably 0.3 to 4 parts by mass, relative to 100 parts by mass of the polymer for oil-resistant rubber. By using the crosslinking agent in an amount of 0.2 part by mass or more, the rubber molded article obtained can have a high strength. Meanwhile, by using the crosslinking agent in an amount of 5 parts by mass or less, the reduction in processability in the rubber molded article obtained can be suppressed.

The crosslinking agent used for crosslinking the polymer for oil-resistant rubber, may be, for example, an acid anhydride or a carboxylic acid salt. They may be used singly in one kind or in combination of two or more kinds.

As the acid anhydride, there can be mentioned phthalic anhydride, methyltetrahydrophthalic acid, methylhexahydrophthalic anhydride, tetrahydrophthalic anhydride. The carboxylic acid salt may be any of a salt (e.g. a metal salt or an ammonium salt) of a monocarboxylic acid, a salt (e.g. a metal salt or an ammonium salt) of a dicarboxylic acid, and a salt (e.g. a metal salt or an ammonium salt) of a polycarboxylic acid. When the carboxylic acid salt is a metal salt, the metal element includes zinc, magnesium. Therefore, as the carboxylic acid salt, there can be mentioned zinc methacrylate, magnesium methacrylate, zinc dimethacrylate.

[3-4] Other additives

The composition for oil-resistant weather-resistant rubber, of the present invention may contain, besides the previously-described reinforcing agent, plasticizer and crosslinking agent, additives such as filler, crosslinking aid (vulcanization accelerator), processing aid, softening agent, anti-oxidant, ultraviolet absorber, flame-retardant, anti-microbial mildew-proof agent, coloring agent.

As the filler, there can be mentioned heavy calcium carbonate, light fine calcium carbonate, ultra-fine activated calcium carbonate, special calcium carbonate, basic magnesium carbonate, kaolin clay, fired clay, pyrophyllite clay, silane-treated clay, synthetic calcium silicate, synthetic magnesium silicate, synthetic aluminum silicate, magnesium carbonate, magnesium hydroxide, magnesium oxide, kaolin, sericite, talc, finely-powdered talc, wollastonite, zeolite, xonotlite, asbestos, PMF (processed mineral fiber), chalk, sepiolite, potassium titanate, ellestadite, gypsum fiber, glass balloon, silica balloon, hydrotalcite, fly ash balloon, Shirasu balloon, carbon balloon, barium sulfate, aluminum sulfate, calcium sulfate, molybdenum disulfide. These may be used singly in one kind or in combination of two or more kinds.

The use amount of the filler is preferably 0 to 200 parts by mass, more preferably 0 to 100 parts by mass, relative to 100 parts by mass of the polymer for oil-resistant rubber.

As the processing aid, there can be mentioned stearic acid, oleic acid, lauric acid, zinc stearate, commercial processing aids. These may be used singly in one kind or in combination of two or more kinds. The use amount of the processing aid is preferably 0 to 20 parts by mass, more preferably 0.5 to 5 parts by mass, relative to 100 parts by mass of the polymer for oil-resistant rubber.

As the softening agent, there can be mentioned a petroleum-based softening agent, a vegetable oil-based softening agent, a factice. They can be used singly in one kind or in combination of two or more kinds. As the petroleum-based softening agent, there can be mentioned an aromatic type, a naphthenic type, a paraffinic type. As the vegetable-based softening agent, there can be mentioned castor oil, cottonseed oil, linseed oil, rape seed oil, soybean oil, palm oil, coconut oil, peanut oil, vegetable wax, As the factice, there can be mentioned black factice, white factice, semi-translucent factice. The use amount of the softening agent is preferably 0 to 50 parts by mass, more preferably 0 to 30 parts by mass, relative to 100 parts by mass of the polymer for oil-resistant rubber.

As the anti-oxidant, there can be mentioned, for example, anti-oxidants of naphthylamine type, diphenylamine type, p-phenylenediamine type, quinoline type, hydroquinone derivative type, mono-, bis- tris- or poly-phenol type, thiobisphenol type, hindered phenol type, phosphorous ester type, imidazole type, nickel dithiocarbamate type and phosphoric acid type. These may be used singly in one kind or in combination of two or more kinds. The use amount of the anti-oxidant is preferably 0 to 10 parts by mass, more preferably 0 to 7 parts by mass, relative to 100 parts by mass of the polymer for oil-resistant rubber.

As the ultraviolet absorber, there can be mentioned benzophenones, benzotriazoles, salicylic acid esters, metal complexes. These may be used singly in one kind or in combination of two or more kinds. The use amount of the ultraviolet absorber is preferably 0 to 10 parts by mass, more preferably 0 to 7 parts by mass, relative to 100 parts by mass of the polymer for oil-resistant rubber.

[3-5] Method for production of composition for oil-resistant weather-resistant rubber or of rubber molded article

The composition for oil-resistant weather-resistant rubber and the rubber molded article, both of the present invention can be produced, for example, as follows. First, the polymer for oil-resistant rubber, the vinyl chloride resin, and the additives other than crosslinking agent and crosslinking aid are placed into a kneader such as Banbury mixer and kneaded at 70 to 180°C to obtain a kneaded product. The kneaded product is cooled. Thereto are added a crosslinking agent (e.g. sulfur), a crosslinking aid (e.g. a vulcanization accelerator), etc.; they are mixed using a Banbury mixer, a mixing roll or the like, followed by crosslinking at 130 to 200°C, to obtain a composition for oil-resistant weather-resistant rubber. Incidentally, when the kneaded product is per se made into a rubber molded article, molding by mold, extrusion molding, injection molding is carried out at the above temperature.

Incidentally, the polymer for oil-resistant rubber and the vinyl chloride resin may be kneaded each in a solid state after coagulation. Alternately, the following operation may be conducted. That is, the polymer for oil-resistant rubber and the vinyl chloride resin are mixed in given proportions each in an emulsion (latex) state before each is made into a solid state, to obtain a mixed fluid; the mixed fluid is subjected to coagulation to obtain a composite material (a composite rubber) containing a polymer for oil-resistant rubber and a vinyl chloride resin; the composite material (the composite rubber) is subjected to the above-mentioned kneading.

[4] Rubber molded article, hose and seal

The rubber molded article of the present invention is made of the previously described composition for oil-resistant weather-resistant rubber, of the present invention and therefore is superior in fuel non-permeability, weather resistance and cold resistance.

As specific examples of the rubber molded article of the present invention, there can be mentioned hoses such as oil cooler hose, air duct hose, power steering hose, control hose, intercooler hose, torque converter hose, oil return hose, heat-resistant hose ; tubes such as bicycle tube, rubber tube, rubber tubing for physical and chemical apparatus ; seals such as bearing seal, bulk system seal, oil seal ; O-ring; packing; gasket; diaphragm; rubber plate; belt; oil level gauge; hose masking; covering material (e.g. heat insulator for pipe); and roll. The present rubber molded article can be used particularly preferably as a hose or a seal, both requiring high fuel non-permeability, weather resistance and cold resistance.

EXAMPLES

The present invention is described below specifically by way of Examples. However, the present invention is not restricted to these Examples. In the following Examples and Comparative Examples, "parts" and "%" are based on mass unless otherwise specified. The methods for measurement or rating of various properties are shown below.

[Contents of structural units of polymer for oil-resistant rubber

The content of acrylonitrile unit was calculated from the nitrogen content determined by elemental analysis. The content of styrene unit was measured by pyrolysis gas chromatography. The content of methacrylonitrile unit was calculated from the nitrogen content determined by elemental analysis.

[Mooney viscosity ($ML_{1+4}$, 100°C)]

It was measured based on JIS K 6300 using a rotor, under the conditions of preheating = one minute, rotor operating time = four minutes, and temperature = 100°C. A Mooney viscosity of 10 to 200 was rated as "o (good)", and a Mooney viscosity deviating from the above range was rated as "X (bad)".

[Oil resistance]

A volume change was measured by an immersion test based on JIS K 6258. Specifically explaining, first, a 20 mm x 20 mm size was punched out from a vulcanized rubber sheet of 2 mm in thickness, to prepare a test specimen. Then, the test specimen was immersed in a test oil [fuel C/ethanol (8/2)] of 40°C for 48 hours and then there was measured a volume change ratio ($\Delta V$ = {[(volume of test specimen before immersion) - (volume of test specimen after immersion)]/(volume of test specimen before immersion)} x 100 (%)). When the volume change ratio was 50% or less, the oil resistance of the vulcanized rubber sheet was rated as "o (good)" and, when the volume change ratio was more than 50%, the oil resistance of the vulcanized rubber sheet was rated as "X (bad)".

[Fuel non-permeability]

Twenty five ml of a test fuel [fuel C/ethanol (8/2)] was placed in a bowl-shaped metal vessel having a diameter of 34 mm at the open end. The open end was sealed with a vulcanized rubber sheet of 2 mm in thickness. The metal vessel was placed in an oven of 40°C and was allowed to stand for 7 days. Then, the reduced amount (mg) of the test oil was measured. The reduced amount was converted to a value per 1 mm thickness and 1 $m^2$ area of vulcanized rubber sheet and per day, to calculate the amount of permeated fuel ($mg \cdot mm/m^2/day$). When the fuel permeation amount was 95 (mg·mm/m$^2$/day) or less, the fuel non-permeability of the vulcanized rubber sheet was rated as "o (good)" and, when the fuel permeation amount was more than 95 (mg·mm/m$^2$/day), the fuel non-permeability of the vulcanized rubber sheet was rated as "X (bad)".

[Tensile strength at break ($T_B$) and tensile elongation at break ($E_B$)]

The mechanical strength of molded article was rated by its tensile strength at break ($T_B$) and tensile elongation at break ($E_B$). Measurement was conducted based on JIS K 6251. A tensile strength at break ($T_B$) of 15 MPa or more was rated as "o (good)" and a tensile strength at break ($T_B$) of less than 15 MPa was rated as "X (bad)". A tensile elongation at break ($E_B$) of 300% or more was rated as "o (good)" and a tensile elongation at break ($E_B$) of less than 300% was rated as "X (bad)".

[Weather resistance (ozone resistance)]

Weather resistance was rated using ozone resistance as a yardstick. The rating was made based on JIS K 6259. Specifically explaining, first, a dumbbell-shaped No. 1 test specimen specified by JIS K 6251 was punched out from a vulcanized rubber sheet of 2 mm in thickness. Then, the test specimen was elongated by 80% and, after 24 hours from the elongation, was placed in an ozone tester (80 pphm, 40°C). 168 hours later, the test specimen was taken out from the ozone tester and examined for the generation of cracks. When the test specimen had no crack, the weather resistance of the vulcanized rubber sheet was rated as "o (good)" and, when the test specimen had cracks, the weather resistance was rated as "X (bad)".

[Cold resistance (brittleness temperature)]

Weather resistance was measured using brittleness temperature as a yardstick. The measurement was made based on JIS K 6723. When the brittleness temperature was -15°c or lower, the cold resistance was rated as "o (good)" and, when the brittleness temperature was higher than -15°C, the cold resistance was rated as "X (bad)".

(Synthesis Example 1)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 40 parts (relative to 100 parts of the fed monomers (component A)) of styrene was fed, and the polymerization was continued. Incidentally, part of the polymerization mixture before styrene addition was taken and analyzed by gas chromatography, which indicated that the residual butadiene was the detection limit or less (0.2 part or less per 100 parts of the polymer formed). The residual acrylonitrile was 40 parts per 100 parts of the fed monomers. The ratio of the conjugated diene monomer relative to the total monomers when 40 parts of styrene was added, was 0.3 mole % or less as calculated from the following formula (1).

$$[(0.2/54)/\{(40/53)+(40/104)\}] \times 100 < 0.3 \qquad (1)$$

Then, when the polymerization conversion reached about 54%, 0.5 part of N,N-diethylhydroxylamine was added to the reaction system to terminate the copolymerization reaction (reaction time: 12 hours). A 0.25% aqueous calcium chloride solution was added to coagulate the copolymer rubber formed. The coagulum was washed with water sufficiently and then dried at about 90°C for 3 hours to obtain a copolymer 1 having a Mooney viscosity [$ML_{1+4}$ (100°C)] of 140 and containing 46% of an acrylonitrile unit and 14% of a styrene unit. The evaluation results thereof are shown in Table 1.
Table 1

| | | Synth. Ex. 1 | Synth. Ex. 2 | Synth. Ex. 3 | Synth. Ex. 4 | Synth. Ex. 5 | Synth. Ex. 6 | Synth. Ex. 7 | Synth. Ex. 8 | Synth. Ex. 9 |
|---|---|---|---|---|---|---|---|---|---|---|
| Synthesis of component A | Butadiene (parts) | 30 | 30 | 30 | 54 | 30 | 30 | 30 | 54 | - |
| | Acrylonitrile parts) | 70 | 70 | 70 | 46 | 70 | 70 | 70 | 46 | - |
| | Polymerization conversion (%) | 60 | 60 | 60 | 70 | 60 | 60 | 60 | 70 | - |
| | Removal of monomers | No | No | Yes | Yes | Yes | Yes | - | - | - |
| Component A | (Parts) | 100 | 100 | 100 | 100 | 100 | 100 | 100 | 100 | - |
| Component B | Butadiene (parts) | - | - | - | - | - | 5 | - | - | - |
| | Acrylonitrile (parts) | - | - | 16.8 | 19.5 | - | 13.5 | - | - | 16.8 |
| | Styrene (parts) | 40 | 40 | 8.4 | 9.7 | | 6.7 | - | - | 8.4 |
| | Methacrylonitrile (parts) | - | - | - | - | 25.2 | - | - | - | - |
| Conjugated diene monomer when A and B were mixed (mol %) | | 0.3 or less | 0.3 or less | 0.9 or less | 0.8 or less | 1 or less | 22 | - | - | - |
| Modification reaction | Polymerization conversion (%) | 54* | 61* | 60 | 60 | 60 | 60 | - | - | - |
| | Component A/ component B ratio | 80/20 | 70/30 | 80/20 | 80/20 | 80/20 | 80/20 | 100/0 | 100/0 | 0/100 |

(continued)

| | | Synth. Ex. 1 | Synth. Ex. 2 | Synth. Ex. 3 | Synth. Ex. 4 | Synth. Ex. 5 | Synth. Ex. 6 | Synth. Ex. 7 | Synth. Ex. 8 | Synth. Ex. 9 |
|---|---|---|---|---|---|---|---|---|---|---|
| Properties of polymer for oil-resistant rubber | Mooney viscosity | 140 | 145 | 145 | 110 | 110 | 110 | 80 | 70 | - |
| | Bound acrylonitrile amount (%) | 46 | 44 | 50 | 43 | 40 | 49 | 50 | 41 | 50 |
| | Bound styrene amount (%) | 14 | 21 | 10 | 10 | - | 8 | - | - | 50 |
| | Bound methacrylonitrile amount (%) | - | - | - | - | 20 | - | - | - | - |

* Final polymerization conversion

(Synthesis Example 2)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 40 parts (relative to 100 parts of the fed monomers (component A)) of styrene was fed, and the polymerization was continued. Part of the polymerization mixture before styrene addition was taken and analyzed by gas chromatography, which indicated that the residual butadiene was the detection limit or less (0.2 part or less per 100 parts of the polymer formed). The residual acrylonitrile was 40 parts per 100 parts of the fed monomers. The ratio of the conjugated diene monomer relative to the total monomers when 40 parts of styrene was added, was 0.3 mole % or less as calculated from the following formula (2).

$$[(0.2/54)/\{(40/53)+(40/104)\}]\times100 < 0.3 \qquad (2)$$

Then, when the polymerization conversion reached about 61%, 0.5 part of N,N-diethylhydroxylamine was added to the reaction system to terminate the copolymerization reaction (reaction time: 12 hours). A 0.25% aqueous calcium chloride solution was added to coagulate the copolymer rubber formed. The coagulum was washed with water sufficiently and then dried at about 90°C for 3 hours to obtain a copolymer 2 having a Mooney viscosity [$ML_{1+4}$ (100°C)] of 145 and containing 44% of an acrylonitrile unit and 21% of a styrene unit. The evaluation results thereof are shown in Table 1.

(Synthesis Example 3)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 0.5 part of N,N-diethylhydroxylamine was added to the reaction system to terminate the copolymerization reaction (reaction time: 8 hours).

Then, steam was fed into the latex formed, to distil off the residual monomers. Analysis by gas chromatography indicated that the amount of the residual butadiene and the amount of the residual acrylonitrile were each the detection limit or less (0.2 part or less per 100 parts of the polymer formed).

After purging the latex with nitrogen, 16.8 parts of acrylonitrile and 8.4 parts of styrene relative to 100 parts polymerization conversion equivalent of the formed polymer (component A) were fed into the latex, then, 0.2 part of potassium persulfate was added and polymerization was conducted at 40°C. The ratio of the conjugated diene monomer to the total monomers when 16.8 parts of acrylonitrile and 8.4 parts of styrene were added, was 0.9 mol % or less as calculated from the following formula (3).

$$[(0.2/54)/\{(16.8/53)+(8.4/104)\}]\times100 < 0.9 \qquad (3)$$

When the polymerization conversion reached about 60%, 0.5 part of N,N-diethylhydroxylamine was added to the reaction system to terminate the copolymerization reaction (reaction time: 4 hours). A 0.25% aqueous calcium chloride solution was added to coagulate the copolymer rubber formed. The coagulum was washed with water sufficiently and then dried at about 90°C for 3 hours to obtain a copolymer 3 having a Mooney viscosity [$ML_{1+4}$ (100°C)] of 145 and containing 50% of an acrylonitrile unit and 10% of a styrene unit. The evaluation results thereof are shown in Table 1.

(Synthesis Example 4)

Into a nitrogen-purged, stainless steel reactor were fed a monomer mixture consisting of 46 parts of acrylonitrile and 54 parts of butadiene, 4 parts of sodium lauryl sulfate, 0.2 part of potassium persulfate and 200 parts of water. Polymerization was conducted at 40°C. When the polymerization conversion reached about 70%, 0.5 part of N,N-diethylhydroxylamine was added to the reaction system to terminate the copolymerization reaction (reaction time: 8 hours).

Then, steam was fed into the latex formed, to distil off the residual monomers. Analysis by gas chromatography indicated that the amount of the residual butadiene and the amount of the residual acrylonitrile were each the detection limit or less (0.2 part or less per 100 parts of the polymer formed). After purging the latex with nitrogen, 19.5 parts of acrylonitrile and 9.7 parts of styrene relative to 100 parts polymerization conversion equivalent of the formed polymer (component A) were fed into the latex, then, 0.2 part of potassium persulfate was added and polymerization was conducted at 40°C. The ratio of the conjugated diene monomer to the total monomers when 19.5 parts of acrylonitrile and 9.7 parts of styrene were added, was 0.8 mol % or less as calculated from the following formula (4).

$$[(0.2/54)/\{(19.5/53)+(9.7/104)\}]\times 100 < 0.8 \qquad (4)$$

When the polymerization conversion reached about 60%, 0.5 part of N,N-diethylhydroxylamine was added to the reaction system to terminate the copolymerization reaction (reaction time: 4 hours). A 0.25% aqueous calcium chloride solution was added to coagulate the copolymer rubber formed. The coagulum was washed with water sufficiently and then dried at about 90°C for 3 hours to obtain a copolymer 4 having a Mooney viscosity [$ML_{1+4}$ (100°C)] of 110 and containing 43% of an acrylonitrile unit and 10% of a styrene unit. The evaluation results thereof are shown in Table 1.

(Synthesis Example 5)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 0.5 part of N,N-diethylhydroxylamine was added to the reaction system to terminate the copolymerization reaction (reaction time: 8 hours).
Then, steam was fed into the latex formed, to distil off the residual monomers. Analysis by gas chromatography indicated that the amount of the residual butadiene and the amount of the residual acrylonitrile were each the detection limit or less (0.2 part or less per 100 parts of the polymer formed). After purging the latex with nitrogen, 25.2 parts of methacrylonitrile relative to 100 parts polymerization conversion equivalent of the formed polymer (component A) was fed into the latex, then, 0.2 part of potassium persulfate was added and polymerization was conducted at 40°C. The ratio of the conjugated diene monomer to the total monomers when 25.2 parts of methacrylonitrile was added, was 1 mol % or less as calculated from the following formula (5).

$$\{(0.2/54)/(25.2/67)\}\times 100 < 1 \qquad (5)$$

When the polymerization conversion reached about 60%, 0.5 part of N,N-diethylhydroxylamine was added to the reaction system to terminate the copolymerization reaction (reaction time: 6 hours). A 0.25% aqueous calcium chloride solution was added to coagulate the copolymer rubber formed. The coagulum was washed with water sufficiently and then dried at about 90°C for 3 hours to obtain a copolymer 5 having a Mooney viscosity [$ML_{1+4}$ (100°C)] of 110 and containing 40% of an acrylonitrile unit and 20% of a methacrylonitrile unit. The evaluation results thereof are shown in Table 1.

(Synthesis Example 6)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 0.5 part of N,N-diethylhydroxylamine was added to the reaction system to terminate the copolymerization reaction (reaction time: 8 hours).
Then, steam was fed into the latex formed, to distil off the residual monomers. Analysis by gas chromatography indicated that the amount of the residual butadiene and the amount of the residual acrylonitrile were each the detection limit or less (0.2 part or less per 100 parts of the polymer formed). After purging the latex with nitrogen, 13.5 parts of acrylonitrile, 6.7 parts of styrene and 5.0 parts of butadiene were fed into the latex, then, 0.2 part of potassium persulfate was added and polymerization was conducted at 40°C. The ratio of the conjugated diene monomer to the total monomers when 13.5 parts of acrylonitrile, 6.7 parts of styrene and 5.0 parts of butadiene were added to the latex, was 22 mol % as calculated from the following formula (6).

$$[(5/54)/\{13.5/53\}+(6.7/104)+(5/54)\}]\times 100 = 22 \qquad (6)$$

When the polymerization conversion reached about 60%, 0.5 part of N,N-diethylhydroxylamine was added to the reaction system to terminate the copolymerization reaction (reaction time: 4 hours). A 0.25% aqueous calcium chloride solution was added to coagulate the copolymer rubber formed. The coagulum was washed with water sufficiently and then dried at about 90°C for 3 hours to obtain a copolymer 6 having a Mooney viscosity [$ML_{1+4}$ (100°C)] of 110 and containing 49% of an acrylonitrile unit and 8% of a styrene unit. The evaluation results thereof are shown in Table 1.

(Synthesis Example 7)

Into a nitrogen-purged, stainless steel reactor were fed a monomer mixture consisting of 70 parts of acrylonitrile and 30 parts of butadiene, 4 parts of sodium lauryl sulfate, 0.2 part of potassium persulfate and 200 parts of water. Polymerization was conducted at 40°C. When the polymerization conversion reached about 60%, 0.5 part of N,N-diethylhydroxylamine was added to the reaction system to terminate the copolymerization reaction (reaction time: 8 hours). A 0.25% aqueous calcium chloride solution was added to coagulate the copolymer rubber formed. The coagulum was washed with water sufficiently and then dried at about 90°C for 3 hours to obtain a copolymer 7 having a Mooney viscosity [$ML_{1+4}$ (100°C)] of 80 and containing 50% of an acrylonitrile unit. The evaluation results thereof are shown in Table 1.

(Synthesis Example 8)

Into a nitrogen-purged, stainless steel reactor were fed a monomer mixture consisting of 46 parts of acrylonitrile and 54 parts of butadiene, 4 parts of sodium lauryl sulfate, 0.2 part of potassium persulfate and 200 parts of water. Polymerization was conducted at 40°C. When the polymerization conversion reached about 70%, 0.5 part of N,N-diethylhydroxylamine was added to the reaction system to terminate the copolymerization reaction (reaction time: 8 hours). A 0.25% aqueous calcium chloride solution was added to coagulate the copolymer rubber formed. The coagulum was washed with water sufficiently and then dried at about 90°C for 3 hours to obtain a copolymer 7 having a Mooney viscosity [$ML_{1+4}$ (100°C)] of 70 and containing 41% of an acrylonitrile unit. The evaluation results thereof are shown in Table 1.

(Synthesis Example 9)

Into a nitrogen-purged, stainless steel reactor were fed 16.8 parts of acrylonitrile, 8.4 parts of styrene, 1 part of sodium lauryl sulfate, 0.05 part of potassium persulfate and 200 parts of water. Polymerization was conducted at 40°C. When the polymerization conversion reached about 60%, 0.5 part of N,N-diethylhydroxylamine was added to the reaction system to terminate the copolymerization reaction (reaction time: 4 hours). A 0.25% aqueous calcium chloride solution was added to coagulate the copolymer rubber formed. The coagulum was washed with water sufficiently and then dried at about 90°C for 3 hours to obtain a copolymer whose Mooney viscosity [$ML_{1+4}$ (100°C)] was not measurable (>>200) and which contained 50% of an acrylonitrile unit and 50% of a styrene unit (the copolymer was expressed as "AN/ST" in Table 2). The evaluation results thereof are shown in Table 1.

(Example 1) (not according to the present invention)

Using a Banbury mixer, there were kneaded, at 70 to 180°C, 100 parts of the polymer for oil-resistant rubber, of Synthesis Example 1, 60 parts of carbon black (a reinforcing agent, "SEAST 116" (trade name), a product of Tokai Carbon Co., Ltd.), 1.0 part of stearic acid (a processing aid, "Lunac S-30" (trade name), a product of Kao Corporation), 0.3 part of sulfur (a crosslinking agent, "Powder Sulfur" (trade name), a product of Tsurumi Kagaku), and 5.0 parts of zinc white (a crosslinking aid, "Zinc Oxide No. 2" (trade name), a product of Seido Chemical Industrial Co., Ltd.), to obtain a kneaded material.

The kneaded material was cooled. Thereinto were kneaded, using a roller, 0.6 part of tetraethylthiuram disulfide (a vulcanization accelerator, "NOCCELER TET" (trade name), a product of Ouchi Shinko Chemical Industrial Co., Ltd.) and 1.6 parts of N-cyclohexyl-2-benzothiazolyl sulfenamide (a vulcanization accelerator, "NOCCELER CZ" (trade name), a product of Ouchi Shinko Chemical Industrial Co., Ltd.), to obtain a rubber composition. The rubber composition was subjected to press vulcanization at 170°C for 20 minutes, to produce a vulcanized rubber sheet (a rubber molded article). Using this vulcanized rubber sheet, the rubber molded article of Example 1 was evaluated. The evaluation results thereof are shown in Table 2.

Table 2

| | | | Ex. 1* | Ex. 2* | Comp. Ex. 1 | Comp. Ex. 2 | Ex. 3 | Ex. 4 | Ex. 5 | Comp. Ex. 3 | Comp. Ex. 4 | Comp. Ex. 5 | Comp. Ex. 6 |
|---|---|---|---|---|---|---|---|---|---|---|---|---|---|
| Polymer for oil-resistant rubber | | (Kind) | Synthe-sis Ex. 1 | Synthe-sis Ex. 2 | Synthe-sis Ex. 7 | Synthe-sis Ex. 8 | Synthe-sis Ex. 3 | Synthe-sis Ex. 4 | Synthe-sis Ex. 5 | Synthe-sis Ex. 7 | Synthe-sis Ex. 8 | Synthe-sis Ex. 6 | Synthe-sis Ex. 7 |
| | | (Parts) | 100 | 100 | 100 | 100 | 70 | 70 | 70 | 70 | 70 | 70 | 56 |
| AN/ST | | (Parts) | - | - | - | - | - | - | - | - | - | - | 14 |
| Vinyl chloride resin | | (Parts) | - | - | - | - | 30 | 30 | 30 | 30 | 30 | 30 | 30 |
| Crosslinking aid | Zinc white | (Parts) | 5 | 5 | 5 | 5 | 5 | 5 | 5 | 5 | 5 | 5 | 5 |
| Processing aid | Stearic acid | (Parts) | 1 | 1 | 1 | 1 | 1 | 1 | 1 | 1 | 1 | 1 | 1 |
| Reinforcing agent | Carbon black | (Parts) | 60 | 60 | 60 | 60 | 40 | 40 | 40 | 40 | 40 | 40 | 40 |
| Plasticizer | Adipic acid ether ester type | (Parts) | - | - | - | - | 25 | 25 | 25 | 25 | 25 | 25 | 25 |
| Crosslinking agent | Sulfur | (Parts) | 0.3 | 0.3 | 0.3 | 0.3 | 0.5 | 0.5 | 0.5 | 0.5 | 0.5 | 0.5 | 0.5 |
| Accelerator | Tetraethyl thiuram disulfide | (Parts) | 0.6 | 0.6 | 0.6 | 0.6 | 1.5 | 1.5 | 1.5 | 1.5 | 1.5 | 1.5 | 1.5 |
| | N-cyclohexyl-2-benzo-thiazolyl sulfenamide | (Parts) | 1.6 | 1.6 | 1.6 | 1.6 | 1.5 | 1.5 | 1.5 | 1.5 | 1.5 | 1.5 | 1.5 |
| Tensile strength at break | | (MPa) | - | - | - | - | 20 | 21 | 18 | 18 | 20 | 19 | 17 |
| | | | - | - | - | - | o | o | o | o | o | o | o |

EP 2 098 545 B1

(continued)

| | | | Ex. 1* | Ex. 2* | Comp. Ex. 1 | Comp. Ex. 2 | Ex. 3 | Ex. 4 | Ex. 5 | Comp. Ex. 3 | Comp. Ex. 4 | Comp. Ex. 5 | Comp. Ex. 6 |
|---|---|---|---|---|---|---|---|---|---|---|---|---|---|
| Polymer for oil-resistant rubber | | (Kind) | Synthe -sis Ex. 1 | Synthe -sis Ex. 2 | Synthe -sis Ex. 7 | Synthe -sis Ex. 8 | Synthe -sis Ex. 3 | Synthe -sis Ex. 4 | Synthe -sis Ex. 5 | Synthe -sis Ex. 7 | Synthe -sis Ex. 8 | Synthe -sis Ex. 6 | Synthe -sis Ex. 7 |
| | | (Parts) | 100 | 100 | 100 | 100 | 70 | 70 | 70 | 70 | 70 | 70 | 56 |
| Tensile elongation at break | | (%) | - | - | - | - | 400 | 420 | 400 | 430 | 440 | 420 | 360 |
| | | | - | - | - | - | o | o | o | o | o | o | o |
| oil resistance | Volume change | (%) | 44 | 45 | 43 | 52 | 28 | 33 | 28 | 30 | 38 | 30 | 36 |
| | | | o | o | o | x | o | o | o | o | o | o | o |
| Fuel non-permeability | Permeation amount | (mg · mm/m $^2$/day) | 50 | 55 | 100 | 220 | 53 | 93 | 57 | 65 | 110 | 55 | 54 |
| | | | o | o | x | x | o | o | o | o | x | o | o |
| Cold resistance | Brittleness temperature | (°C) | - | - | - | - | -21 | -35 | -22 | -22 | -35 | -21 | -12 |
| | | | - | - | - | - | o | o | o | o | o | o | x |
| Weather resistance | Ozone resistance | | - | - | - | - | o | o | o | x | o | x | x |
| * not according to the present invention | | | | | | | | | | | | | |

EP 2 098 545 B1

(Examples 2 to 5 and Comparative Examples 1 to 6)

Vulcanized rubber sheets (rubber molded articles) were produced in the same manner as in Example 1 except that compounding was made according to the formulations shown in Table 2. Using the vulcanized rubber sheets, the rubber molded articles of Examples 2 to 5 and Comparative Examples 1 to 6 were evaluated. The evaluation results thereof are shown in Table 2.

As seen in Table 2, the rubber molded articles of Examples 1 to 5 showed good oil resistance and good fuel non-permeability. In particular, the rubber molded articles of Examples 3 to 5 were superior in oil resistance and fuel non-permeability and good in cold resistance and weather resistance. Meanwhile, the rubber molded articles of Comparative Examples 1 and 4 were not sufficiently satisfactory in fuel non-permeability; the rubber molded article of Comparative Example 2 was not sufficiently satisfactory in oil resistance and fuel non-permeability; the rubber molded articles of Comparative Examples 3 and 5 were not sufficiently satisfactory in weather resistance; and the rubber molded article of Comparative Example 6 was not sufficiently satisfactory in cold resistance and weather resistance.

INDUSTRIAL APLICABILITY

The method for producing a polymer for oil-resistant rubber, can be suitably used for production of a polymer for oil-resistant rubber, capable of giving a rubber molded article superior in oil resistance and fuel non-permeability. The polymer for oil-resistance rubber, when made into a rubber, is superior in oil resistance and fuel non-permeability and therefore can be suitably used as a raw material for the composition for oil-resistant weather-resistant rubber, of the present invention (therefore, the rubber molded article of the present invention). The composition for oil-resistant weather-resistant rubber, of the present invention can give a rubber molded article which is superior in oil resistance, fuel non-permeability, weather resistance and cold resistance.

The rubber molded article of the present invention, which is superior in oil resistance, fuel non-permeability, weather resistance and cold resistance, can be suitably used as hoses such as oil cooler hose, air duct hose, power steering hose, control hose, intercooler hose, torque converter hose, oil return hose, heat-resistant hose ; tubes such as bicycle tube, rubber tube, rubber tubing for physical and chemical apparatus ; seals such as bearing seal, bulk system seal, oil seal ; O-ring; packing; gasket; diaphragm; rubber plate; belt; oil level gauge; hose masking; covering material (e.g. heat insulator for pipe); and roll. The present rubber molded article can be used particularly suitably as a hose or a seal.

**Claims**

1. A composition for oil-resistant weather-resistant rubber, which contains 100 parts by mass of a polymer for oil-resistant rubber, said polymer being, obtainable by a method which comprises adding, to an aqueous dispersion of an unsaturated nitrile-conjugated diene copolymer (component A), a monomer composition (component B) containing at least one kind of monomer selected from the group consisting of a nitrile group-containing monomer (component B-1), a (meth)acrylic acid ester monomer (component B-2) and an aromatic vinyl compound monomer (component B-3), and conducting a polymerization reaction in a state that the ratio of the conjugated diene monomer present in the system, to the total monomers present in the system is controlled at 10 mol% or less and 3 to 300 parts by mass of a vinyl chloride resin having an average polymerization degree of 550 or more.

2. The composition for oil-resistant weather-resistant rubber according to Claim 1, which further contains a reinforcing agent, a plasticizer and a crosslinking agent.

3. A rubber molded article obtained from a composition for oil-resistant weather-resistant rubber according to Claim 1 or 2.

4. A hose or seal obtained from a composition for oil-resistant weather-resistant rubber according to Claim 1 or 2.

**Patentansprüche**

1. Zusammensetzung für ölresistenten wetterresistenten Gummi, welcher 100 Masseteile eines Polymers für ölresistenten Gummi und 3 bis 300 Masseteile eines Vinylchloridharzes mit einem durchschnittlichen Polymerisationsgrad von 550 oder mehr enthält, wobei das Polymer erhältlich ist durch ein Verfahren, welches umfasst, das Zugeben einer Monomerzusammensetzung (Komponente B), die zumindest eine Art von Monomer enthält, das aus der Gruppe ausgewählt ist, die aus einem Nitrilgruppe-enthaltenden Monomer (Komponente B-1), einem (Meth)acrylsäureestermonomer (Komponente B-2) und einem aromatischen Vinylverbindungsmonomer (Komponente B-3) besteht, zu einer wässrigen Dispersion eines ungesättigten Nitril-konjugierten Dien-copolymers (Komponente A) und das Durchführen einer Polymerisationsreaktion in einem Zustand, so dass das Verhältnis des konjugierten Dienmonomers, das in dem System vorhanden ist, zu den gesamten Monomeren, die in dem System vorhanden sind, auf 10 Mol-% oder weniger eingestellt ist.

2. Zusammensetzung für ölresistenten wetterresistenten Gummi nach Anspruch 1, welcher ferner ein Verstärkungsagens, einen Plastifizierer und ein Quervernetzungsagens enthält.

3. Gummi Formartikel, der aus einer Zusammensetzung für ölresistenten wetterresistenten Gummi nach Anspruch 1 oder 2 erhalten ist.

4. Schlauch oder Dichtung, der/die aus einer Zusammensetzung für ölresistenten wetterresistenten Gummi nach Anspruch 1 oder 2 erhalten ist.


**Revendications**

1. Composition pour un caoutchouc résistant aux intempéries et résistant à l'huile, qui contient 100 parties en masse d'un polymère pour un caoutchouc résistant à l'huile, ledit polymère pouvant être obtenu par un procédé qui comprend l'addition, à une dispersion aqueuse d'un copolymère de nitrile insaturé-diène conjugué (composant A), d'une composition de monomère (composant B) contenant au moins un type de monomère choisi dans le groupe constitué d'un monomère contenant un groupe nitrile (composant B-1), un monomère d'ester d'acide (méth)acrylique (composant B-2) et d'un monomère de composé vinyle aromatique (composant B-3), et conduisant à une réaction de polymérisation dans un état où le rapport du monomère de diène conjugué présent dans le système, sur les monomères totaux présents dans le système est réglé à 10% en moles ou moins et 3 à 300 parties en masse d'une résine de chlorure de vinyle ayant un degré de polymérisation moyen supérieur ou égal à 550.

2. Composition pour un caoutchouc résistant aux intempéries et résistant à l'huile selon la revendication 1, qui contient en outre un agent renforçant, un plastifiant et un agent de réticulation.

3. Article moulé en caoutchouc obtenu à partir d'une composition pour un caoutchouc résistant aux intempéries et résistant à l'huile selon la revendication 1 ou 2.

4. Tuyau ou joint obtenu à partir d'une composition pour un caoutchouc résistant aux intempéries et résistant à l'huile selon la revendication 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0026292 A
- EP 0779300 A
- US 5629397 A
- EP 1184414 A